# EUROPÄISCHE PATENTANMELDUNG

(11) **EP 3 984 917 A1**
(43) Veröffentlichungstag der Anmeldung: **20.04.2022**
(21) Anmeldenummer: 21192950.0
(22) Anmeldetag: 25.08.2021
(51) Int. Cl.: B65G 1/02, B65G 1/08

(54) **KOMMISSIONIERREGAL**

(30) Priorität: 14.10.2020 DE 102020127054
(71) Anmelder: Dynamic Logistics Systems B.V., 7005 AG Doetinchem (NL)
(72) Erfinder: Berndsen, Roland, 6942 EX Didam (NL); Lieftink, William, 7091 XG Dinxperlo (NL)
(74) Vertreter: Janke Scholl Patentanwälte PartG mbB

(57) **Zusammenfassung**

Vorgeschlagen wird ein erhöhte Sicherheitsanforderungen erfüllendes Kommissionierregal in der Bauart eines Durchlaufregals aus zueinander parallelen Gassen (5), die mit Rollenbahnen für mit Waren beladene Ladungsträger versehen sind, wobei sich die Gassen (5) zwischen einer für Personen strikt gesperrten Beschickungsseite (7) und einer für Personen zugänglichen Kommissionierseite des Durchlaufregals erstrecken. Die Gassen (5) weisen in Längsrichtung einzelne Bahnabschnitte für die Positionierung jeweils einer Palette auf, wobei ein erster Bahnabschnitt (5A) näher zu der Beschickungsseite (7) und ein zweiter Bahnabschnitt näher zu der Kommissionierseite angeordnet ist. Im Bereich des ersten Bahnabschnitts (5A) ist eine einen Personendurchtritt verhindernde Durchtrittsperre (20) angeordnet, die zwischen einer Öffnungsstellung und einer die Gasse (5) sperrenden Schließstellung beweglich ist. Die Durchtrittssperre (20) ist in der Schließstellung verriegelbar, und zwischen der Beschickungsseite (7) und der Durchtrittssperre (20) ist ein Betätigungsmittel (25) zum Entriegeln der Durchtrittssperre (20) angeordnet.

## Beschreibung

Die Erfindung betrifft ein Kommissionierregal in der Bauart eines Durchlaufregals aus zueinander parallelen Gassen, die mit Rollenbahnen für mit Waren beladene Ladungsträger versehen sind, wobei sich die Gassen zwischen einer für Personen gesperrten Beschickungsseite und einer für Personen zugänglichen Kommissionierseite des Durchlaufregals erstrecken, die Gassen in Längsrichtung einzelne Bahnabschnitte für die Positionierung jeweils eines Ladungsträgers aufweisen, wobei ein erster Bahnabschnitt näher zu der Beschickungsseite und ein zweiter Bahnabschnitt näher zu der Kommissionierseite angeordnet ist.

Derartige Kommissionierregale finden in Logistikzentren Anwendung. Das Kommissionieren, d. h., das mehr oder weniger händische Zusammenstellen von Waren entsprechend einem vorliegenden Auftrag, erfolgt zumeist unter Verwendung von Ladungsträgern, zum Beispiel standardisierten Paletten, die mit den angelieferten Waren bestückt sind, wobei sich in der Regel auf jedem Ladungsträger bzw. jeder Palette ausschließlich gleichartige Waren befinden. Die angelieferten Paletten werden von der einen Stirnseite des Kommissionierregals, der Beschickungsseite, her in einer zuvor ausgewählten Gasse des Kommissionierregals abgesetzt, wohingegen an der anderen Stirnseite des Kommissionierregals, der Kommissionierseite, Personen tätig sind, um die Einzelwaren gemäß Kommissionsauftrag direkt von der jeweiligen Palette zu entnehmen und auftragsgemäß zusammenzustellen. In den einzelnen Gassen befinden sich leicht abschüssig geneigte Rollenbahnen, auf denen die Paletten von der Beschickungsseite zu der Kommissionierseite rollen können. Jede Gasse ist zumindest von solcher Länge, dass darin in Längsrichtung hintereinander mindestens zwei Paletten Platz finden, so dass sich eine erste, einen noch vollständigen Warenvorrat aufnehmende Palette in einer Vorratsposition nahe der Beschickungsseite befindet und sich eine weitere Palette an der Kommissionierseite befindet, um von dieser Palette einzelne Waren zu entnehmen.

Die Beschickung mit neuen, beladenen Paletten erfolgt zumeist vollautomatisch mit sogenannten Regalbediengeräten (RBG). Deren Bewegung längs der Beschickungsseite des Kommissionierregals bis vor die einzelnen Gassen erfolgt vollautomatisch und programmgesteuert, weshalb sich auf der Beschickungsseite des Kommissionierregals aus Sicherheitsgründen keine Personen aufhalten dürfen. Für Personen zugänglich ist ausschließlich die Kommissionierseite des Regals.

Es hat allerdings Fälle gegeben, in denen Personen den Versuch unternommen haben, durch die Tiefe des Regals hindurch bis auf dessen Beschickungsseite zu gelangen, was aus den genannten Gründen lebensgefährlich ist.

Zur Verhinderung solcher Situationen wurde bereits vorgeschlagen, in jeder Gasse eine Sperre zu installieren, durch die Personen daran gehindert werden sollen, weiter als bis dorthin zu gelangen und insbesondere in den Bewegungsbereich des Regalbediengeräts zu gelangen. Diese Sperren sind allerdings nicht in allen denkbaren Situationen wirksam.

Aufgabe der Erfindung ist es, bei einem solchen Kommissionierregal durch technische Maßnahmen die Gefahr weiter zu verringern, dass Personen durch das Regal hindurch auf die für Personen gefährliche Beschickungsseite des Regals gelangen können.

Zur Lösung dieser Aufgabe wird bei einem Kommissionierregal mit den eingangs angegebenen Merkmalen vorgeschlagen, dass im Bereich des ersten Bahnabschnitts eine Durchtrittssperre angeordnet ist, die zwischen einer Öffnungsstellung und einer die Gasse sperrenden Schließstellung beweglich ist, dass die Durchtrittssperre in der Schließstellung verriegelbar ist, und dass an der Beschickungsseite oder zwischen der Beschickungsseite und der Durchtrittssperre ein Betätigungsmittel zum Entriegeln der Durchtrittssperre angeordnet ist.

Durch das solcherart ausgebildete Kommissionierregal wird verhindert, dass Personen durch das Regal hindurch auf die für Personen sehr gefährliche Beschickungsseite gelangen können. Dies wird durch die den Querschnitt der Gasse versperrende Durchtrittssperre nicht nur erschwert, sondern verhindert, indem die Durchtrittssperre gegen alle Möglichkeiten, sie mit Handkraft zu öffnen, blockiert wird.

Ein gewolltes Öffnen der Durchtrittssperre in Richtung zu der Beschickungsseite hin lässt sich schon relativ einfach durch die Bauart der Durchtrittssperre verhindern, indem die Sperre konstruktiv so gestaltet ist, dass sie sich nur in Transportrichtung der Palette öffnen lässt, hingegen nicht in Gegenrichtung. Allerdings könnte eine Person versuchen, an der Durchtrittssperre zu ziehen, diese also in Transportrichtung der Palette zu öffnen. Dies jedoch wird erfindungsgemäß verhindert, indem die Durchtrittssperre als weitere Schutzmaßnahme in ihrer Schließstellung verriegelbar ist, und sich die Verriegelung nur durch Aktivieren eines Betätigungsmittels aufheben bzw. entsperren lässt.

Dabei ist von besonderer Bedeutung, dass das Betätigungsmittel an der Beschickungsseite der Gasse angeordnet oder zumindest nahe zu der Beschickungsseite angeordnet ist. Denn dort ist das Betätigungsmittel für eine Person nicht erreichbar und damit nicht aktivierbar. Vielmehr befindet sich das Betätigungsmittel zum Entriegeln der Durchtrittssperre in deren Schließstellung auf der für einen Zugriff durch eine Person abgewandten Seite der Durchtrittssperre, insbesondere an oder im Bereich der Beschickungsseite.

Dort kann das Bestätigungsmittel entweder durch die darüber abgesetzte oder hinüberrollende Palette aktiviert werden, um so die Verriegelung aufzuheben. Alternativ besteht die Möglichkeit, dass das Regalbediengerät (RBG) bei dem Einlagern der neuen Palette das Betätigungsmittel aktiviert, z B. indem eine Transportgabel des Regalbediengeräts (RBG) den entsprechenden Betätigungsdruck ausübt. Eine weitere Alternative ist, dass das Bestätigungsmittel sowohl durch das Regalbediengerät (RBG) als auch durch die darüber abgesetzte oder hinüberrollende Palette aktiviert wird.

Mit dem Einlagern einer neuen Palette in die Gasse stößt die Palette automatisch zunächst gegen das Betätigungsmittel, wodurch die Entriegelungsstellung aktiviert wird mit der Folge, dass die Verriegelung der Durchtrittssperre aufgehoben wird. Anschließend vermag die neu eingelagerte Palette bzw. die darauf abgesetzte Ladung aufgrund der Bewegung der Palette längs der Gasse die Durchtrittssperre beiseite zu drücken, wodurch die Durchtrittssperre den Querschnitt der Gasse und damit den Transportweg für die beladene Palette freigibt.

Dieser Sperr- und Freigabemechanismus gelingt dann besonders gut, wenn sich die Durchtrittssperre aus zwei schwenkbaren Türen zusammensetzt. In der Schließstellung versperren die beiden Türen gemeinsam den Querschnitt der Gasse. Nach ihrer Entriegelung hingegen lassen sich die Türen gegensinnig zur Seite schwenken und geben so den Querschnitt der Gasse frei.

Durch die beschriebene Ausgestaltung ist ausgeschlossen, dass eine Person von der Kommissionierseite her in der Lage wäre, die Durchtrittssperre zu überwinden. Wenn sich andererseits gerade eine beladene Palette in der geöffneten Durchtrittssperre befindet, so versperrt die beladene Palette selbst den Querschnitt der Gasse, so dass es auch in dieser Situation für eine Person nicht möglich ist, unter Überwindung der Sperre auf die Beschickungsseite des Regals zu gelangen.

Bevorzugte Ausgestaltungen des Kommissionierregals sind in den jeweiligen Unteransprüchen angegeben.

So wird mit einer Ausgestaltung vorgeschlagen, dass das Betätigungsmittel im Bewegungsbereich des in Längsrichtung der Gasse betrachteten Umrisses des Ladungsträgers angeordnet ist, oder in diesen Bewegungsbereich hineinragt. Auf diese Weise reicht bereits allein die Transportbewegung des Ladungsträgers aus, das Betätigungsmittel zu aktivieren mit der Folge eines Entriegelns der Durchtrittssperre. Es sind also keine gesonderten Maßnahmen erforderlich, um bei jeder Einlagerung einer neuen Palette bzw. eines neuen Ladungsträgers separat das Betätigungsmittel zu aktivieren.

Vorzugsweise ist das Betätigungsmittel eine schwenkbewegliche Klappe. Diese ist vorzugsweise auf einer unterhalb des Transportniveaus der Rollenbahn angeordneten, horizontalen Schwenkachse gelagert, wobei sich ein Betätigungsbereich der Klappe über dem Transportniveau der Rollenbahn befindet, wodurch dieser Betätigungsbereich von einer über die Klappe rollenden Palette aufgrund des Gewichts der Palette niedergedrückt wird.

Um ein zu frühes erneutes Verriegeln der Durchtrittssperre zu verhindern, wird mit einer Ausgestaltung vorgeschlagen, dass in Längsrichtung der Gasse der Abstand des Betätigungsmittels zu der Durchtrittssperre geringer ist, als die Länge eines Ladungsträgers.

Vorzugsweise ist die Durchtrittssperre derart ausgebildet, dass sie in der Schließstellung die Gasse in beide Richtungen sperrt. Sofern sich daher gerade keine Palette im Bereich der Durchtrittssperre befindet, kann diese daher weder in die eine, noch in die andere Richtung willentlich geöffnet werden.

Vorzugsweise setzt sich der Mechanismus zum Verriegeln der Durchtrittssperre zusammen aus einem mit dem Betätigungsmittel gekoppelten Riegel als Sperrelement, sowie einem dem Riegel in Sperrrichtung gegenüberliegenden Blockierelement an der Durchtrittssperre. Indem in der Sperrstellung der Riegel dem Blockierelement gegenüberliegt, ist die Durchtrittssperre an einer Bewegung von ihrer Schließstellung in ihre Öffnungsstellung gehindert.

Vorzugsweise ist der Riegel über ein in Längsrichtung der Gasse sich erstreckendes Übertragungselement mit dem Betätigungsmittel gekoppelt. Das Übertragungselement ist z. B. ein mechanisches Gestänge. Das Übertragungselement kann entweder durch Übertragung einer Druckbewegung arbeiten, etwa in der Bauart eines Druckgestänges, oder durch Zugausübung, z. B. mittels eines Zugseils, welches das Betätigungsmittel mit dem Riegel verbindet.

Bevorzugt ist, dass die Durchtrittssperre zwei gegensinnig schwenkbare Klapptüren umfasst, wobei die Klapptüren jeweils auf einer in etwa vertikalen Schwenkachse gelagert sind, die seitlich des ersten Bahnabschnitts gelagert ist. Wenn die Schwenkachsen nicht exakt vertikal sind, sondern jeweils eine leichte Neigung zu der Beschickungsseite hin aufweisen, sind keine zusätzlichen Maßnahmen zum erneuten Verschließen der Durchtrittssperre nach Durchfahrt einer Palette erforderlich, da die Klapptüren aufgrund der Schwerkraft selbsttätig wieder in ihre Schließstellung zurückschwenken.

Bevorzugt ist ferner, dass die Unterkanten der Klapptüren einen vertikalen Abstand zu der Oberseite der Rollenbahn aufweisen, der größer ist als die Höhe eines Ladungsträgers ohne darauf gelagerte Waren. Bei dieser Ausgestaltung kann ein Ladungsträger ohne Waren, d. h. eine leere Palette, ohne Kontakt zu den Klapptüren unter den geschlossenen Klapptüren hindurch fahren. Die Palette aktiviert zwar, bei ihrem Absetzen auf der Rollenbahn, das Betätigungsmittel und führt damit zu einem vorübergehenden Entriegeln der Durchtrittssperre. Bewegt sich die Palette jedoch weiter bis in den Bereich der Durchtrittssperre, ist spätestens dann die Aktivierung des Betätigungsmittels bereits wieder aufgehoben mit der Folge, dass die Durchtrittssperre wieder blockiert ist und eine Person die Sperre nicht überwinden kann.

Vorzugsweise ist die aus frei drehbaren Rollen bestehende Rollenbahn zu der Kommissionierseite hin abschüssig geneigt, wobei die Neigung zwischen 2 und 6 Grad beträgt. So ist sichergestellt, dass Paletten selbsttätig unter Einfluss ihres Eigengewichts entlang der Rollenbahn von der Beschickungsseite bis zu der Kommissionierseite rollen können. An der Kommissionierseite ist ein Endanschlag befestigt, welcher spätestens hier die Bewegung der Palette stoppt.

Für eine belastungsgerechte Anordnung und Anzahl der Rollen der Rollenbahn wird vorgeschlagen, dass die Rollenbahn im Bereich des ersten Bahnabschnitts einerseits und des zweiten Bahnabschnitts andererseits unterschiedlich ausgebildet ist. Die Rollenbahn ist auf dem ersten Bahnabschnitt aus drei parallelen und seitlich voneinander getrennten Rollensträngen, und auf dem zweiten Bahnabschnitt aus zwei parallelen und seitlich voneinander getrennten Rollensträngen zusammengesetzt. Dadurch wird dem Umstand Rechnung getragen, dass die Rollenbahn auf der Beschickungsseite stärker durch Gewichtskräfte und vor allem Aufsetzkräfte belastet ist, als im Bereich der Kommissionierseite.

Ferner vorgeschlagen wird ein Verfahren zur Durchtrittsbegrenzung in einer Gasse eines Kommissionierregals, wobei das Verfahren dadurch gekennzeichnet ist, dass das Betätigungsmittel zur Betätigung durch einen sich auf der Rollenbahn in dem ersten Bahnabschnitt bewegenden Ladungsträger eingerichtet ist, dass die Durchtrittssperre durch Betätigung des Betätigungsmittels entriegelt wird, dass die auf dem Ladungsträger befindlichen Waren gegen die entriegelte Durchtrittssperre stoßen und diese dadurch beiseite drücken, und dass die Durchtrittssperre auch nach nicht mehr betätigtem Betätigungsmittel geöffnet bleibt, bis die auf dem Ladungsträger befindlichen Waren den Bereich der Durchtrittssperre in Bahnlängsrichtung verlassen haben.

Weitere Vorteile und Einzelheiten finden sich in der nun folgenden Erläuterung von Ausführungsbeispielen, wobei auf die Zeichnungen Bezug genommen wird. Darin zeigt
- Fig. 1: einen perspektivischen Blick auf die drei Gassen eines Kommissionierregals mit Blickrichtung von der Kommissionierseite her,
- Fig. 2: einen perspektivischen Blick auf die drei Gassen des Kommissionierregals mit Blickrichtung von der Beschickungsseite her,

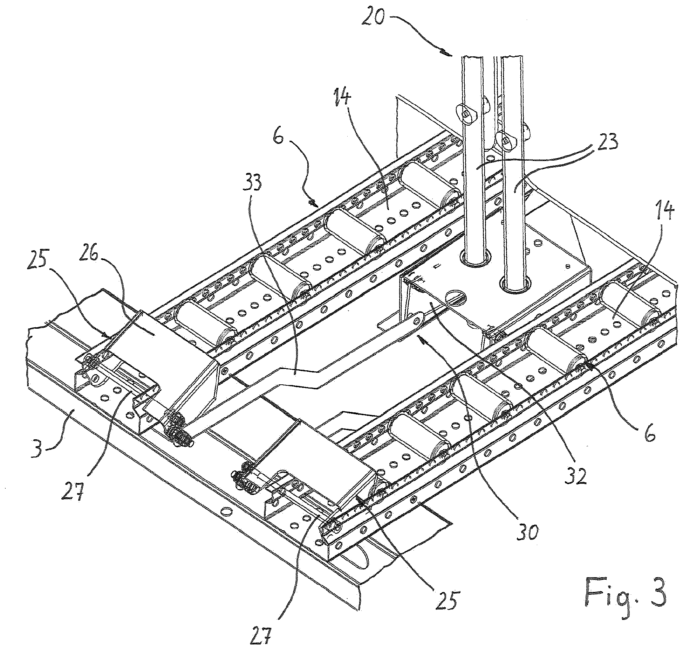

- Fig. 3: verschiedene Einzelheiten im Bereich der Beschickungsseite;
- Fig. 4a: in stark vereinfachter Darstellung eine Draufsicht auf eine der Gassen, wobei sich in der Gasse ein mit Waren beladener Ladungsträger in Form einer Palette befindet;
- Fig. 4b: eine Draufsicht auf dieselbe Gasse, wobei sich dieses Mal in der Gasse zwei mit Waren beladene Ladungsträger befinden.

Das nachfolgend beschriebene Kommissionierregal findet zum Beispiel in einem Logistikzentrum Anwendung. Das Kommissionieren, d. h., dass mehr oder weniger händische Zusammenstellen von Waren entsprechend einem vorliegenden Auftrag, erfolgt unter Verwendung von Ladungsträgern, z. B. standardisierten Paletten, die mit den angelieferten Waren bestückt sind. Auf jedem Ladungsträger bzw. jeder Palette befinden sich in der Regel gleichartige Waren oder Warengebinde.

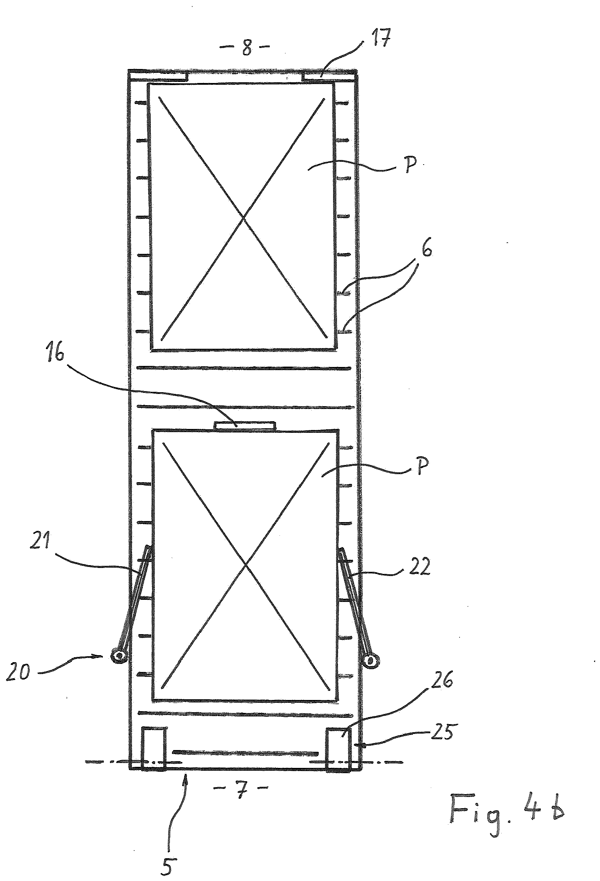

Das Kommissionierregal setzt sich aus nebeneinander und vorzugsweise auch in mehreren Ebenen übereinander angeordneten und jeweils zueinander parallelen Gassen 5 zusammen. Gemäß Fig. 4b finden in jeder Gasse 5 hintereinander mindestens zwei Paletten P mit darauf gelagerten Waren Platz. Das Grundgerüst des Kommissionierregals wird vor allem durch vertikale Stützen 2 und horizontale Querträger oder Traversen 3 gebildet.

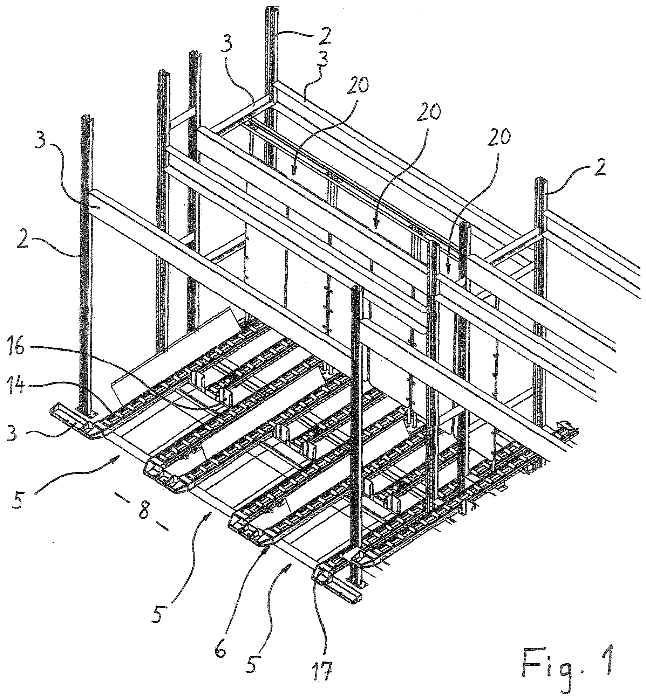

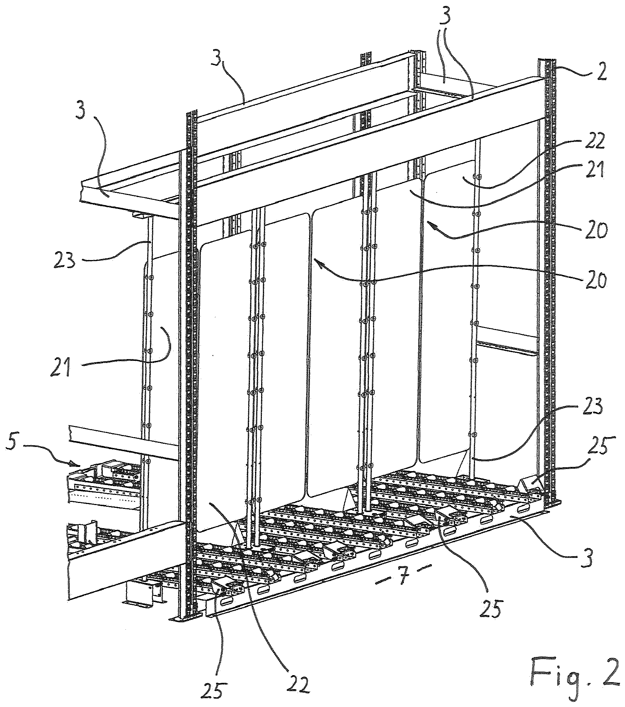

Die unter Einsatz eines autonomen Regalbediengeräts (RBG) angelieferten Paletten P werden ausschließlich von der einen Stirnseite des Kommissionierregals her, der Beschickungsseite 7 (Fig. 2), in der jeweils hierfür ausgewählten Gasse 5 abgesetzt. Hingegen sind an der anderen Stirnseite des Regals, der Kommissionierseite 8 (Fig. 1), Personen tätig, um die Einzelwaren gemäß Kommissionsauftrag direkt von der jeweiligen Palette zu nehmen und auftragsgemäß zusammenzustellen, d.h. zu kommissionieren.

In den einzelnen Gassen 5 befinden sich leicht abschüssig geneigte Rollenbahnen 6 aus frei drehbar gelagerten Rollen, auf denen die Paletten P aufgrund ihres Eigengewichts von der Beschickungsseite 7 zu der Kommissionierseite 8 rollen können.

Jede Gasse 5 ist bei dem hier erläuterten Ausführungsbeispiel von solcher Länge, dass darin in Längsrichtung hintereinander mindestens zwei Paletten P Platz finden, so dass sich eine erste, einen noch vollständigen Warenvorrat aufnehmende Palette in einer Vorratsposition nahe der Beschickungsseite 7 befindet und sich eine weitere Palette nahe der Kommissionierseite 8 befindet, so dass von dieser weiteren Palette Waren direkt entnommen werden können. Die Gassen 5 können jedoch auch länger gestaltet sein und z. B. weitere Längsabschnitte aufweisen, so dass dann insgesamt drei oder mehr Paletten P hintereinander in der Gasse Platz finden.

Belastungstechnisch ist es von Vorteil, wenn die Rollenbahn 6 auf der Beschickungsseite 7 stabiler und damit belastbarer ausgebildet ist, als auf der Kommissionierseite 8. Dies auch deshalb, da voll beladene Paletten P auf der Beschickungsseite 7 zunächst durch das Regalbediengerät (RBG) abgesetzt werden, und der Impuls beim Absetzen zu einer hohen Belastung dieses Abschnitts der Rollenbahn 6 führt. Aus diesem Grunde ist bei dem Ausführungsbeispiel die Rollenbahn 6 nicht einheitlich über ihre gesamte Länge, vielmehr ist der der Beschickungsseite 7 nähere Bereich verstärkt. Dies wird erreicht, indem sich die Rollenbahn 6 auf einem näher zu der Beschickungsseite 7 angeordneten ersten Bahnabschnitt 5A aus drei parallelen und seitlich voneinander getrennten Rollensträngen 14 zusammensetzt, während sich die Rollenbahn 6 auf einem näher zu der Kommissionierseite 8 angeordneten zweiten Bahnabschnitt 5B nur aus zwei parallelen und seitlich voneinander getrennten Rollensträngen 14 zusammensetzt.

Anstelle einzelner Rollenstränge 14 kann die Rollenbahn 6 auch mit über die gesamte Breite der Bahn verteilten Rollen oder Walzen bestückt sein.

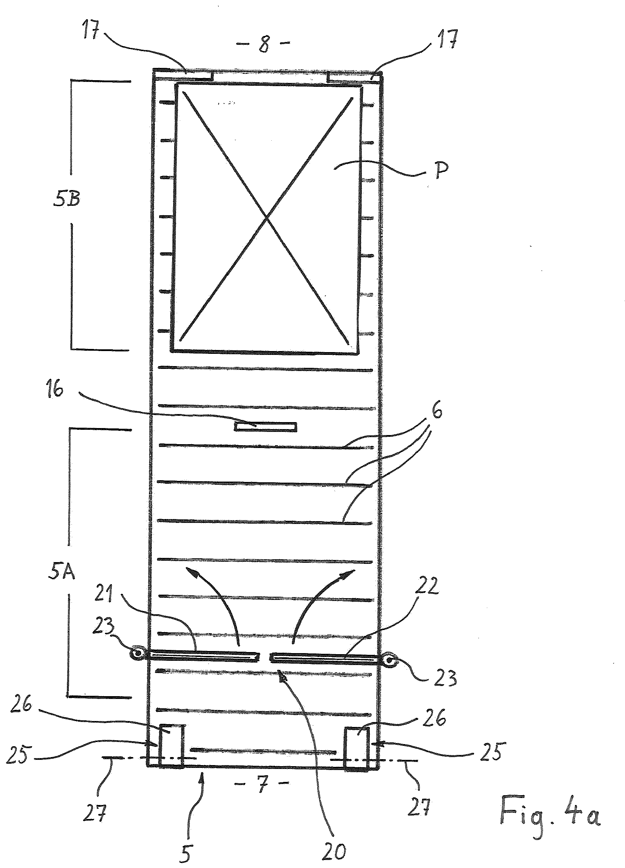

Das in Fig. 4a und Fig. 4b dargestellte Kommissionierregal ist von solcher Tiefe, dass in jeder Gasse 5 hintereinander zwei Paletten P Platz finden, also zwei Palettenpositionen eingenommen werden können. Die erste Palettenposition befindet sich auf dem Bahnabschnitt 5A der Gasse 5, welcher sich näher zu der Beschickungsseite 7 befindet. Die zweite Palettenposition befindet sich auf einem zweiten Bahnabschnitt 5B der Gasse 5, welcher sich näher zu der Kommissionierseite 8 befindet.

Bestandteil der Rollenbahn 6 kann ein Rückhalteelement 16 sein, welches eine Palette P mit Position auf dem ersten Bahnabschnitt 5A zurückhält, d. h. davon abhält, weiter zu rollen.

Das hierzu über die Oberseite und damit die Transportebene der Rollenbahn 6 hinausragende Rückhalteelement 16 lässt sich bei Bedarf absenken, wozu das Rückhalteelement 16 über einen Mechanismus mit einem Fußtaster verbunden ist. Der Fußtaster befindet sich an der Kommissionierseite 8 und ist durch eine dort tätige Person durch einen Fußtritt aktivierbar. Mit Betätigung des Fußtasters senkt sich das Rückhalteelement 16, so dass die auf dem ersten Bahnabschnitt 5A zurückgehaltene Palette P weiterrollen kann, bis sie auf dem zweiten Bahnabschnitt 5B an einen Endanschlag 17 stößt, der jedes Weiterrollen verhindert. Der Endanschlag 17 ist vorzugsweise ein fester Anschlag, d. h. er ist nicht absenkbar.

Im Betrieb des Kommissionierlagers befindet sich in der Position des zweiten Bahnabschnitts 5B eine Palette P, von der aktuell Waren kommissioniert werden, nämlich durch die auf der Kommissionierseite 8 tätigen Personen. Auf der Position des ersten Bahnabschnitts 5A hingegen befindet sich eine neue, noch vollständig mit Waren beladene Palette P. Diese wird auf dieser Position vorrätig gehalten, bis die Palette auf dem zweiten Bahnabschnitt 5B vollständig entleert und dann entfernt wurde. Erst dann kann, nach Absenken des Rückhalteelements 16, die vollständig beladene Palette nachrücken, bis sie an dem Endanschlag 17 gestoppt wird.

Um auf der Kommissionierseite 8 tätige Personen daran zu hindern, durch die Tiefe des Regals hindurch auf dessen Beschickungsseite 7 zu gelangen, ist im Bereich des ersten Bahnabschnitts 5A eine aus zwei zueinander weisenden Türen zusammengesetzte Durchtrittssperre 20 installiert. Die Türen sind gegensinnig schwenkbare Klapptüren 21, 22, die jeweils auf einer im wesentlichen vertikalen Schwenkachse 23 gelagert sind und sich daher öffnen lassen, indem sie zur Seite schwenken. Das Schwenken ist nur in der in Fig. 4a mit Schwenkpfeilen bezeichneten Richtung möglich, die gleichsinnig zu der Transportrichtung der Paletten P auf der Rollenbahn 6 ist. In die entgegengesetzte Richtung sind die geschlossenen Klapptüren 21, 22 nicht schwenkbar, da eine integrierte Sperre dies verhindert. Hierzu sitzen z. B. die Schwenkachsen 23 jeweils in einem Drehlager, welches nur in eine Richtung eine Drehbewegung zulässt, nicht in die entgegengesetzte Drehrichtung.

Die Schwenkachse 23 der ersten Klapptüre 21 befindet sich auf der linken, und die Schwenkachse 23 der zweiten Klapptüre 22 auf der rechten Seite des ersten Bahnabschnitts 5A. Die Klapptüren 21, 22 und deren Schwenkachsen 23 sind in der Weise eingerichtet, dass die Klapptüren 21, 22 in ihrer einander zugewandten Schließstellung den Querschnitt der Gasse überwiegend versperren und insbesondere soweit versperren, dass eine Person diese Durchtrittssperre 20 nicht ohne weiteres überwinden kann.

Zusätzlich sind Maßnahmen getroffen, um die Klapptüren 21, 22 situationsabhängig in ihrer Schließstellung zu verriegeln, also die Klapptüren gegen jeglichen Öffnungsversuch zu blockieren.

Für das Verriegeln der Durchtrittssperre 20 ausschließlich in ihrer Schließstellung ist unterhalb des Transportniveaus der Rollenbahn 6 ein Mechanismus 30 angeordnet. Dieser setzt sich aus einem Blockierelement an der Durchtrittssperre 20 und aus einem dem Blockierelement beweglich gegenüberliegenden Riegel 32 zusammen. In einer Position des beweglichen Riegels 32, in der dieser gegen das Blockierelement anliegt, ist die Beweglichkeit der Durchtrittssperre 20 blockiert. In einer Position des beweglichen Riegels 32 hingegen, in der dieser nicht gegen das Blockierelement anliegt, ist auch die Durchtrittssperre 20 so freigegeben, dass sie normal beweglich ist, insbesondere indem die Klapptüren 21, 22 bestimmungsgemäß in ihre Öffnungsstellung schwenkbar sind.

Um den Riegel 32 von seiner Blockierstellung und seine Freigabestellung zu aktivieren, ist ein Betätigungsmittel 25 vorhanden, welches an der Beschickungsseite 7, oder nahe der Beschickungsseite 7 angeordnet ist. Das Betätigungsmittel 25 ist hier eine schwenkbewegliche Klappe. Diese Klappe 25 ist unterhalb der Transportebene der Rollenbahn 6 auf einer horizontalen Drehachse 27 gelagert. Ein Betätigungsbereich 26 der Klappe 25 befindet sich dabei oberhalb der Transportebene der Rollenbahn 6.

Wird eine neue Palette P von der Beschickungsseite 7 her auf die Rollenbahn 6 gesetzt, kommt es durch die Gewichtslast der Palette zum Absenken der schwenkbar gelagerten Klappe 25, da die Palette gegen den Betätigungsbereich 26 der Klappe 25 stößt und den Betätigungsbereich 26 von seiner Ausgangsstellung über dem Transportniveau der Rollenbahn 6 bis auf das Transportniveau der Rollenbahn herunterdrückt. Das Herunterdrücken der Klappe 25 kann gegebenenfalls auch entgegen einer Rückstellkraft einer auf die Klappe 25 oder auf den Mechanismus 30 wirkenden Rückstellfeder erfolgen.

Der die Bewegung koppelnde Mechanismus 30 zwischen der Klappe 25 und der Verriegelung ist in der Weise ausgebildet, dass die Klappe 25 über ein in Längsrichtung der Gasse 5 sich erstreckendes Übertragungselement 33 mit dem Riegel 32 unmittelbar oder mittelbar verbunden ist.

Bei den Ausführungsbeispielen ist das Übertragungselement 33 des Mechanismus 30 eine mit der Klappe 25 über ein Gelenk verbundene Stange, deren anderes Ende über ein weiteres Gelenk mit dem Riegel 32 verbunden ist. Der Riegel 32 selbst ist seinerseits schwenkbeweglich am Gestell der Rollenbahn gelagert und er verfügt über eine Ausnehmung, in die das Blockierelement je nach Situation eingreift oder nicht eingreift. Hierbei ist das Blockierelement ein von der Schwenkachse 23 der jeweiligen Klapptüre 21, 22 horizontal abstehender Zapfen.

Alternativ kann das Übertragungselement 33 des Mechanismus 30 so ausgebildet sein, dass die durch die Klappe 25 als Betätigungsmittel ausgeübte Bewegung durch ein Zugelement, zum Beispiel durch ein Zugseil, auf den Riegel 32 übertragen wird, um diesen von der Blockierstellung in die Freigabestellung zu überführen.

Bei dem Ausführungsbeispiel ist jeder der beiden Klapptüren 21, 22 ein entsprechender Mechanismus 30 zugeordnet, einschließlich eines der jeweiligen Klapptüre mittels des Übertragungselements 33 zugeordneten, eigenen Übertragungselements 25. Dabei befindet sich ein erstes Übertragungselement 25 auf der linken Seite der Gasse 5 und dient der Entriegelung der linken Klapptüre 21, während sich ein zweites Übertragungselement 25 auf der rechten Seite der Gasse 5 befindet und der Entriegelung der rechten Klapptüre 22 dient. Alternativ ist es möglich, nur ein einziges Betätigungsmittel 25 in Gestalt z. B. einer einzigen Klappe vorzusehen, mit dem über ein entsprechendes Gestänge als Übertragungselement 33 beide Klapptüren 21, 22 zugleich entriegelbar sind.

Wichtig ist, dass sich die Klappen 25 zum Entriegeln der Durchtrittssperre 20 auf der für einen Zugriff durch eine Person abgewandten Seite der Durchtrittssperre 20 befinden, also an der Beschickungsseite 7 oder nahe der Beschickungsseite 7. Dies hat zugleich den Vorteil, dass mit dem Einlagern einer neuen Palette P in die Gasse 5 diese Palette automatisch zunächst gegen die Klappe 25 stößt, so dass diese mittels des Übertragungselements 33 die Verriegelung der Durchtrittssperre 20 aufhebt.

Alternativ besteht die Möglichkeit, dass das Regalbediengerät (RBG) bei dem Einlagern der neuen Palette P die Klappe 25 aktiviert. Dies kann geschehen, indem z. B. die Transportgabel, mit der das Regalbediengerät versehen ist, einen entsprechenden Betätigungsdruck gegen die Klappe 25 ausübt und so die Verriegelung der Sperre aufhebt.

Anschließend vermag die neu eingelagerte Palette P aufgrund ihrer durch Schwerkraft bedingten Transportbewegung und der Neigung der Rollenbahn die Klapptüren 21, 22 beiseite zu drücken, wodurch der Querschnitt der Gasse 5 und damit der Transportweg für die mit Waren beladene Palette freigegeben ist.

Befindet sich erst einmal eine beladene Palette P in der geöffneten Durchtrittssperre 20, so versperrt die Ladung auf der Palette den Querschnitt der Gasse, so dass es auch in dieser Situation für eine Person nicht möglich ist, auf die Beschickungsseite 7 zu gelangen.

Die Schwenkachsen 23 der Klapptüren 21, 22 sollten jeweils eine leichte Neigung hin zu der Beschickungsseite 7 aufweisen. Auf diese Weise sind keine zusätzlichen Maßnahmen zum selbsttätigen Verschließen der Durchtrittssperre 20 nach Durchfahrt einer Palette P erforderlich, da die Klapptüren 21, 22 aufgrund der Schwerkraft selbsttätig in ihre Schließstellung zurückschwenken.

Um bei Durchfahrt einer Palette ein zu frühes Zurückschwenken der Klapptüren 21, 22 und damit ein erneutes Verriegeln zu verhindern, sollte in Längsrichtung der Gasse 5 der Abstand des Betätigungsmittels 25 zu der Schwenkachse 23 der Klapptüren 21, 22 geringer sein, als die Länge einer Palette P.

Die Unterkanten der Klapptüren 21, 22 sollten einen vertikalen Abstand zu dem durch die Oberseiten der Rollen definierten Transportniveau aufweisen, der größer ist als die Höhe der Palette P ohne darauf gelagerte Ware. Dadurch kann eine leere Palette ohne Kontakt zu den Klapptüren 21, 22 unter den geschlossenen Klapptüren 21, 22 hindurchfahren. Die Palette aktiviert zwar, bei ihrem Absetzen auf der Rollenbahn 6, dass Betätigungsmittel 25 und führt damit zu einem vorübergehendem Entriegeln der Klapptüren 21, 22. Bewegt sich die Palette P jedoch weiter bis in den Bereich der Klapptüren 21, 22, ist spätestens dann die Aktivierung des Betätigungsmittels 25 infolge der Rückstellkraft der Rückstellfeder beendet mit der Folge, dass die Durchtrittssperre 20 wieder durch den Riegel 32 blockiert ist und eine Person die Sperre nicht ohne weiteres überwinden kann.

### Bezugszeichenliste

- 2: Stütze
- 3: Querträger, Traverse
- 5: Gasse
- 5A: Bahnabschnitt
- 5B: Bahnabschnitt
- 6: Rollenbahn
- 7: Beschickungsseite
- 8: Kommissionierseite
- 14: Rollenstrang
- 16: Rückhalteelement
- 17: Endanschlag
- 20: Durchtrittssperre
- 21: Klapptüre
- 22: Klapptüre
- 23: Schwenkachse
- 25: Betätigungsmittel, Klappe
- 26: Betätigungsbereich
- 27: Drehachse
- 30: Mechanismus
- 32: Riegel
- 33: Übertragungselement
- P: Ladungsträger, Palette

## Patentansprüche

1. Kommissionierregal in der Bauart eines Durchlaufregals aus zueinander parallelen Gassen (5), die mit Rollenbahnen (6) für mit Waren beladene Ladungsträger (P) versehen sind, wobei sich die Gassen (5) zwischen einer für Personen gesperrten Beschickungsseite (7) und einer für Personen zugänglichen Kommissionierseite (8) des Durchlaufregals erstrecken, die Gassen (5) in Längsrichtung einzelne Bahnabschnitte (5A, 5B) für die Positionierung jeweils eines Ladungsträgers (P) aufweisen, wobei ein erster Bahnabschnitt (5A) näher zu der Beschickungsseite (7) und ein zweiter Bahnabschnitt (5B) näher zu der Kommissionierseite (8) angeordnet ist, **dadurch gekennzeichnet, dass** im Bereich des ersten Bahnabschnitts (5A) eine Durchtrittsperre (20) angeordnet ist, die zwischen einer Öffnungsstellung und einer die Gasse (5) sperrenden Schließstellung beweglich ist, dass die Durchtrittssperre (20) in der Schließstellung verriegelbar ist, und dass an der Beschickungsseite (7) oder zwischen der Beschickungsseite (7) und der Durchtrittssperre (20) ein Betätigungsmittel (25) zum Entriegeln der Durchtrittssperre (20) angeordnet ist.

2. Kommissionierregal nach Anspruch 1, **dadurch gekennzeichnet, dass** das Betätigungsmittel (25) im Bewegungsbereich des in Längsrichtung der Gasse (5) betrachteten Umrisses des Ladungsträgers (P) angeordnet ist oder in diesen Bewegungsbereich hineinragt.

3. Kommissionierregal nach Anspruch 1 oder 2, **dadurch gekennzeichnet, dass** das Betätigungsmittel eine schwenkbewegliche Klappe (25) ist.

4. Kommissionierregal nach Anspruch 3, **dadurch gekennzeichnet, dass** die Klappe (25) auf einer unterhalb des Transportniveaus der Rollenbahn (6) angeordneten Drehachse (27) gelagert ist und sich ein Betätigungsbereich (26) der Klappe (25) über dem Transportniveau der Rollenbahn (6) befindet.

5. Kommissionierregal nach einem der vorangehenden Ansprüche, **dadurch gekennzeichnet, dass** in Längsrichtung der Gasse (5) der Abstand des Betätigungsmittels (25) zu der Durchtrittssperre (20) geringer ist, als die Länge eines Ladungsträgers (P).

6. Kommissionierregal nach einem der vorangehenden Ansprüche, **dadurch gekennzeichnet, dass** die Durchtrittssperre (20) ausgebildet ist, in der Schließstellung die Gasse (5) in beide Richtungen zu sperren.

7. Kommissionierregal nach einem der vorangehenden Ansprüche, **gekennzeichnet durch** einen Mechanismus (30) zum Verriegeln der Durchtrittssperre (20), der sich aus einem mit dem Betätigungsmittel (25) gekoppelten Riegel (32) und einem dem Riegel (32) gegenüberliegenden Blockierelement an der Durchtrittssperre (20) zusammensetzt.

8. Kommissionierregal nach Anspruch 7, **dadurch gekennzeichnet, dass** der Riegel (32) über ein in Längsrichtung der Gasse (5) sich erstreckendes Übertragungselement (33) mit dem Betätigungsmittel (25) gekoppelt ist.

9. Kommissionierregal nach einem der vorangehenden Ansprüche, **dadurch gekennzeichnet, dass** die Durchtrittssperre (20) zwei gegensinnig schwenkbare Klapptüren (21, 22) umfasst, wobei die Klapptüren (21, 22) jeweils auf einer im Wesentlichen vertikalen Schwenkachse (23) gelagert sind, die seitlich des ersten Bahnabschnitts (5A) angeordnet ist.

10. Kommissionierregal nach Anspruch 9, **dadurch gekennzeichnet, dass** die Schwenkachsen (23) jeweils eine Neigung zu der Beschickungsseite (7) hin aufweisen.

11. Kommissionierregal nach einem der Ansprüche 9 oder 10, **dadurch gekennzeichnet, dass** die Unterkanten der Klapptüren (21, 22) einen vertikalen Abstand zu der Rollenbahn (6) aufweisen, der größer ist als die Höhe eines Ladungsträgers (P) ohne Waren.

12. Kommissionierregal nach einem der vorangehenden Ansprüche, **dadurch gekennzeichnet, dass** die Rollenbahn (6) zu der Kommissionierseite (8) hin abschüssig geneigt ist, wobei die Neigung zwischen 2 und 6 Grad beträgt.

13. Kommissionierregal nach einem der vorangehenden Ansprüche, **dadurch gekennzeichnet, dass** die Rollenbahn (6) im Bereich des ersten Bahnabschnitts (5A) einerseits und des zweiten Bahnabschnitts (5b) andererseits unterschiedlich ausgebildet ist, wobei sich die Rollenbahn (6) auf dem ersten Bahnabschnitt (5A) aus drei parallelen und seitlich voneinander getrennten Rollensträngen (14) und auf dem zweiten Bahnabschnitt (5B) aus zwei parallelen und seitlich voneinander getrennten Rollensträngen (14) zusammensetzt.

14. Verfahren zur Durchtrittsbegrenzung in einer Gasse (5) eines Kommissionierregals nach einem der Ansprüche 1 bis 13, **dadurch gekennzeichnet, dass** das Betätigungsmittel (25) zur Betätigung durch einen sich auf der Rollenbahn (6) in dem ersten Bahnabschnitt (5A) bewegenden Ladungsträger (P) eingerichtet ist, dass die Durchtrittssperre (20) durch Betätigung des Betätigungsmittels (25) entriegelt wird, dass die auf dem Ladungsträger (P) befindlichen Waren gegen die entriegelte Durchtrittssperre (20) stoßen und diese dadurch beiseite drücken, und dass die Durchtrittssperre (20) auch nach nicht mehr betätigtem Betätigungsmittel (25) geöffnet bleibt, bis die auf dem Ladungsträger (P) befindlichen Waren den Bereich der Durchtrittssperre (20) in Bahnlängsrichtung verlassen haben.
